# EUROPEAN PATENT SPECIFICATION

(11) **EP 2 870 101 B1**
(45) Date of publication and mention of the grant of the patent: **17.08.2016**
(21) Application number: 13753711.4
(22) Date of filing: 19.06.2013
(51) Int. Cl.: B66C 21/04, A01G 23/00

(54) **FORESTRY SKYLINE AND A DRIVING ASSEMBLY OF SUCH SKYLINE**
FORSTWIRTSCHAFTLICHER SEILKRAN UND ANTRIEBSANORDNUNG FÜR EINEN SOLCHEN SEILKRAN
CÂBLAGE FORESTIER ET ENSEMBLE D'ENTRAÎNEMENT D'UN TEL CÂBLAGE

(30) Priority: 04.07.2012 SI 201200223
(43) Date of publication of application: 13.05.2015
(73) Proprietor: Tajfun Planina Proizvodnja Strojev, D.o.o., 3225 Planina Pri Sevnici (SI)
(72) Inventor: SPAN, Iztok, 1000 Ljubljana (SI)
(74) Representative: Borstar, Dusan
(86) International application number: PCT/SI2013/000038
(87) International publication number: WO 2014/014423

(56) References cited:
- EP-A2- 0 161 437
- GB-A- 2 053 128
- US-A- 2 790 622
- US-A- 3 283 454
- US-A- 4 005 779

## Description

The invention belongs to performing operations and transporting, namely to lifting, hoisting or towing appliances, and in particular to rope railway systems and cable cranes, by which the carriage used for towing the load is moving along the cable, which is suspended at each desired distance above the ground. In the field of performing operations and transporting, such invention also belongs to runways for underhung trolleys.

The aim of the present invention is to create a forestry skyline comprising a pylon with a chassis, which should be connectable to a tractor and furnished with a pair of wheels, as well as corresponding hydraulically driven winding drums, which should be driven by means of a tractor cardan joint shaft and should enable coiling of a suspension cable, a reverse cable and a towing cable, as well as the required hydraulic components and pulleys, which are necessary for setting-up and driving a forestry skyline, wherein appropriate leveling of said pylon both in longitudinal and transversal direction of the skyline would have to be enabled during said setting-up the skyline, and wherein during operation of such skyline said pylon would have to be anchored directly into the ground, so that each loads acting on said pylon shall be completely transferred towards the ground.

Skylines are disclosed in US 4 005 779 A, GB 2 053 128 A, US 3 283 454 A and US 2 790 622 A.

A forestry skyline is also disclosed in EP 0 161 437 A2 and comprises a mobile driving assembly as well as a carriage, which is movable along a suspension cable and comprises a pair of bearing pulleys, which are intended for resting the carriage on said cable and also for guiding said carriage during said movement along the suspension cable, a pair of guiding pulleys, which are arranged vertically below said bearing pulleys and are adapted for guiding of a reverse cable via said carriage, and moreover a supporting pulley, which is arranged vertically below and between said guiding pulleys and is intended for supporting and guiding of a towing cable with each disposable load. The suspension cable of such skyline extends from a corresponding winding drum, which is embedded within a framework of a driving assembly, towards a re-directing pulley arranged on the pylon and towards the first stationary point on each terrain, to which said cable is fixed, wherein said suspension cable is adapted to provide a required support and guiding of said carriage, namely of said supporting pulleys on the carriage. Said reverse cable extends from a corresponding winding drum, which is embedded within a framework of a driving assembly via a re-directing pulley arranged on the pylon as well as via said guiding pulleys on the carriage towards a further re-directing pulleys arranged closely to said first stationary point, where it is re-directed towards the carriage, to which it is attached. In addition, said cableway comprises a towing cable, which extends from a corresponding winding drum, which is embedded within a framework of a driving assembly via a re-directing pulley arranged on the pylon as well as via said supporting pulley on the carriage towards each disposable load, by which said towing cable is optionally interconnected. Moreover, said skyline comprises at least two tensioning cable sections, which extend between a tensioning pulley, which is arranged on that end portion of said pylon, which protrudes away from the ground, and at least two further stationary points on the ground, which are located apart from each tractor and said driving assembly, preferably in a direction away from said first stationary point and apart from each other, by which appropriate anchoring of said pylon is enabled in its vertical position, when the load is towed.

The driving assembly of such skyline comprises a pylon, which is furnished with re-directing pulleys, which are arranged on that end portion thereof, which protrudes away from the ground, and which are intended for guiding of a suspension rope for guiding and supporting a carriage movable along it, of a reverse cable for displacing said carriage, as well as for guiding a towing cable, which extends via said carriage and is intended for towing of each disposable load. Said driving assembly moreover comprises a framework with integrated winding drums for coiling i.e. receiving of said suspension cable, reverse cable and towing cable.

The applicant is moreover aware that said driving assembly is arranged on a chassis with wheels, and that modern commercially available skylines offered by manufacturers producing forestry winches and other forestry accessories are furnished with a towing coupling, which is pivotally connected to said framework and pylon and is generally intended for establishing interconnection between said driving assembly and a tractor for the purposes of both towing said driving assembly along each terrain as well as for at least temporarily maintaining each driving assembly in each desired position by means of said tractor. Modern known skylines are furnished with a hydraulic cylinder, which is pivotally linked to said towing coupling and therefore with a three-point linkage of said tractor, by which pivoting of said driving assembly together with the pylon is enabled in the longitudinal direction of the skyline, and moreover, such skylines also comprise a chassis with wheels, which however serves exclusively for displacing said driving assembly together with the pylon along each terrain in the sense of towing by means of each available tractor. Said towing coupling, when building-up the skyline is performed, enables leveling the pylon in the longitudinal direction of the cableway, wherein the pylon as such is permanently located at certain distance above the ground, so that all loads acting on the pylon are then transferred towards the ground either via said wheels or maybe also via the framework of the driving assembly, which is however conceived similar like in forestry winches and enables linear contact with each disposable ground. As mentioned, leveling of the pylon is possible only in the longitudinal direction but not also in the transversal direction of the skyline. During the practical exploitation, such skyline is usually built-up on a corrugated terrain, so that such supporting of an essentially loaded pylon is questionable both in respect of stability and also of possible undesired sinking and penetration into the ground due to said loadings, in particular since the pylon cannot be leveled also in the transversal direction.

A further mobile assembly with a pylon is disclosed in WO 2004/076255 A1 and is intended for building-up a classic cableway, wherein said pylon is supported by four telescopic legs protruding apart from each other, by which said pylon is maintained in its upward position, and by which also leveling of said pylon is possible in all directions and also displacing of said pylon along each terrain. Also in this case, said pylon is permanently maintained at certain distance above the ground, and moreover, such device is autonomously displaceable and must therefore be furnished with its own engine, although it is intended exclusively for supporting of a suspension cable without any possibility of manipulating a load. To this aim, the device could be furnished with a telescopic arm, by which however manipulating within a very limited area around the device could be enabled.

The present invention refers to a forestry skyline, comprising
- a mobile driving assembly, which is adapted to be towed by means of a tractor and is connectable in a detachable manner on the one hand with a three-point linkage on a tractor and on the other hand with a cardan joint shaft on said tractor, wherein said driving assembly includes
   - a telescopically conceived pylon, which is on its first end portion protruding apart from the ground furnished with freely rotatable pulleys suitable for guiding a suspension cable used for supporting and guiding of a carriage, which is movable along said suspension cable, and also for guiding a reverse cable, which is used for displacing said carriage, as well as for guiding a towing cable, which is extended via said carriage and used for towing each load;
   - a framework, which is firmly connected with said pylon and is furnished with winding drums, which are integrated therein and are each per se hydraulically driven by means of a hydraulic pump powered by said cardan joint shaft on the tractor, and are each per se used for receiving and coiling of said suspension cable, reverse cable and towing cable;
   - a towing coupling, which is pivotally connected with said framework and pylon and is used for establishing interconnection between the driving assembly and the tractor for the purposes of towing said driving assembly along each terrain as well as for at least temporarily maintaining of said driving assembly in each desired position by means of said tractor;
   - a hydraulic cylinder, which is pivotally connected on the one hand with said towing coupling and said three-point linkage on the tractor and other hand with the framework, by which the pylon can be pivoted in the longitudinal direction of the skyline; as well as
   - a chassis, which is furnished with a pair of wheels and is used for transporting the driving assembly with the framework and the pylon in the sense of towing by means of said tractor along each disposable ground.

In addition to said driving assembly, such skyline further comprising
- a carriage, which is movable along said suspension cable and comprises at least two bearing pulleys used for supporting the carriage when placed on said suspension cable as well as for guiding said carriage along said suspension cable, at least two guiding pulleys, which are in the vertical direction of the skyline located below said bearing pulleys and are used for guiding of the reverse cable via said carriage, as well as a supporting pulley, which is in the vertical direction of the skyline located below and between said guiding pulleys and is used for supporting and guiding of the towing cable together with each disposable load; as well as
- said suspension cable extending from the belonging winding drum located within said framework of the driving assembly and via said redirecting pulley on the pylon towards the first stationary point on each terrain, to which it is attached, by which said suspension cable is used for supporting and guiding the carriage, namely said supporting pulleys of the carriage;
- said reverse cable extending from the belonging winding drum located within said framework of the driving assembly via the belonging redirecting pulley on the pylon and via said guiding pulleys on the carriage towards a further re-directing pulley arranged adjacent to said first stationary point, where it is re-directed back to the carriage, to which it is then attached;
- said towing cable extending from the belonging winding drum located within said framework of the driving assembly via the belonging redirecting pulley on the pylon and via said supporting pulley on the carriage towards each disposable load, with which said towing cable is optionally connected;
and moreover
- at least two tensioning cable sections, which each per se extend between a tensioning pulley, which is located on the first end portion of the pylon protruding away from the ground, and two further stationary points located on the ground apart from the tractor and the driving assembly in direction opposite to said first stationary point and apart from each other, by which appropriate anchoring of the pylon (11) in its vertical or slanted position is enabled by towing each load.

The invention provides that said chassis is furnished with a pair of wheels, which are each per se pivotally connected with the pylon with the possibility of adjusting position of each wheel relative to said pylon with the possibility of maintaining each particular wheel in each desired position, on the one hand for the purposes of adaptation to each disposable configuration of ground and on the other hand due to vertically displacing said pylon for the purposes of transporting and/or anchoring and/or pivoting thereof on each ground, namely due to leveling the pylon in the transversal direction, and at the same time, the second end portion of said pylon, which is faced towards the ground, is adapted for anchoring of the pylon by means of penetrating thereof into the ground due to the weight of said driving assembly.

In a preferred embodiment of the invention, each wheel of the chassis of the driving assembly is pivotally connected to the pylon via a parallelogram mechanism, which is actuated by means of a hydraulic cylinder. Said parallelogram mechanism for establishing interconnection between each particular wheel with the pylon comprises
- an upper pivot joint and an lower pivot joint which are arranged above each other on the pylon;
- an upper pivot joint and an lower pivot joint which are arranged above each other on the axle of each particular wheel;
- an upper joint lever, which is on the one hand pivotally connected with the upper pivot point on the axle and on the other hand also pivotally with the upper pivot joint on the pylon;
- an lower joint lever, which is on the one hand pivotally connected with the lower pivot point on the axle and on the other hand also pivotally with the lower pivot joint on the pylon;
and moreover
- a hydraulic cylinder, which is on the one hand pivotally connected with a pivot joint arranged on the pylon adjacent to the previously mentioned upper pivot joint, and on the other hand also pivotally with a further pivot point arranged on the lower joint lever in the area between its pivot joint on the axle and its pivot joint on the pylon. Each joint lever is preferably conceived as a double-arm i.e. fork-like lever.

Moreover, said pylon is preferably furnished with at least one protrusion, which is arranged on its second end portion, which is faced towards the ground, and which is adapted to facilitate penetration of the pylon into the ground.

The invention furthermore provides that said pylon is telescopically conceived and consists of two or more telescopic sections, which are inserted into each other and displaceable relative to each other by means of a hydraulic cylinder, which is mounted in the interior of said pylon, wherein said hydraulic cylinder is telescopically conceived.

The invention is furthermore described on the basis of an embodiment, which is presented in the attached drawings, wherein
- Fig. 1: is a schematically illustrated front view of forestry skyline together with a tractor;
- Fig. 2: is a perspective front view of a driving assembly of the forestry skyline and a pylon, when observed from the right side;
- Fig. 3: is a perspective front view of said driving assembly of the forestry skyline the pylon, when observed from the left side; and

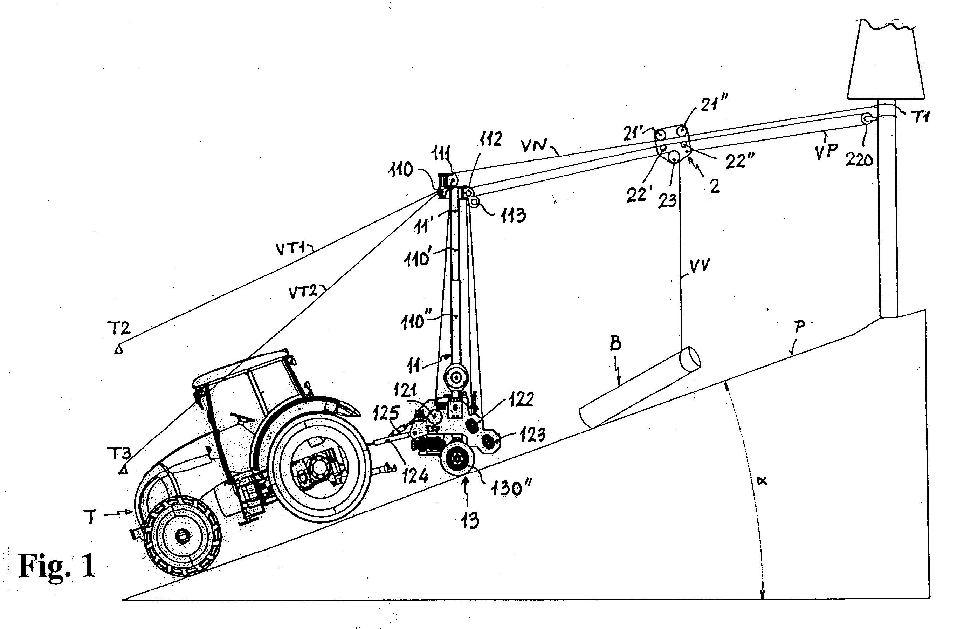

- Fig. 1: is a schematically illustrated concept of anchoring and leveling of said pylon and corresponding chassis.

A forestry skyline in accordance with the invention is illustrated in Fig. 1 and comprises a driving assembly 1, which is connectable with a tractor T, namely with a commonly used and typical three-point linkage on said tractor T on the one hand, which is adapted for establishing cooperation with various agricultural and forestry implements incl. e.g. with forestry towing winches, and on the other hand also with a cardan joint shaft of said tractor T, by which said driving assembly is energized, namely supplied with torque used for driving of a hydraulic pump and optionally also any other components belonging to said driving assembly of such forestry skyline.

For the purposes of better understanding of further description, a longitudinal direction shall be defined to extend in the longitudinal direction of said tractor T as shown in Fig. 1, which at least approximately corresponds to a direction, in which subsequently described suspension cable and towing cable extend and in which each load B is then towed, while the transversal direction is defined by means of a direction of a geometric axis of rear wheels on said tractor T, a vertical direction and correspondingly also a horizontal direction are defined relative to gravitation, while the other directions are mutatis mutandis defined relative to each disposable ground P, which is in Fig. 1 inclined at angle α relative to the horizontal direction.

The forestry skyline according to Figs 1 - 4 comprises a mobile driving assembly, which is adapted to be towed by means of said tractor T, and can be connected in detachable manner on the one hand with said three-point linkage, and on the other hand to said cardan joint shaft on said tractor T.

Said driving assembly comprises a supporting pylon 11, a framework 12 which is firmly interconnected with said pylon 11, a towing coupling 124 which is pivotally interconnected with said framework 11 and said pylon 11, a hydraulic cylinder 125 which is pivotally connected to said towing coupling 124, as well as a chassis 13 which is furnished with wheels 130', 130".

Said pylon 11 is a telescopic pylon, and is furnished with freely rotatable guiding pulleys 111, 112, 113, which are arranged on its end portion 11' located apart from the ground P and are adapted to guide a suspension cable VN, which serves for supporting and guiding a carriage 2, which is movable along said suspension cable VN at each desired distance above the ground G, as well as for guiding a reverse cable VP serving for displacing said carriage 2, and also for guiding a towing cable VV, which extends via said carriage 2 and serves for towing each load B (Fig. 1).

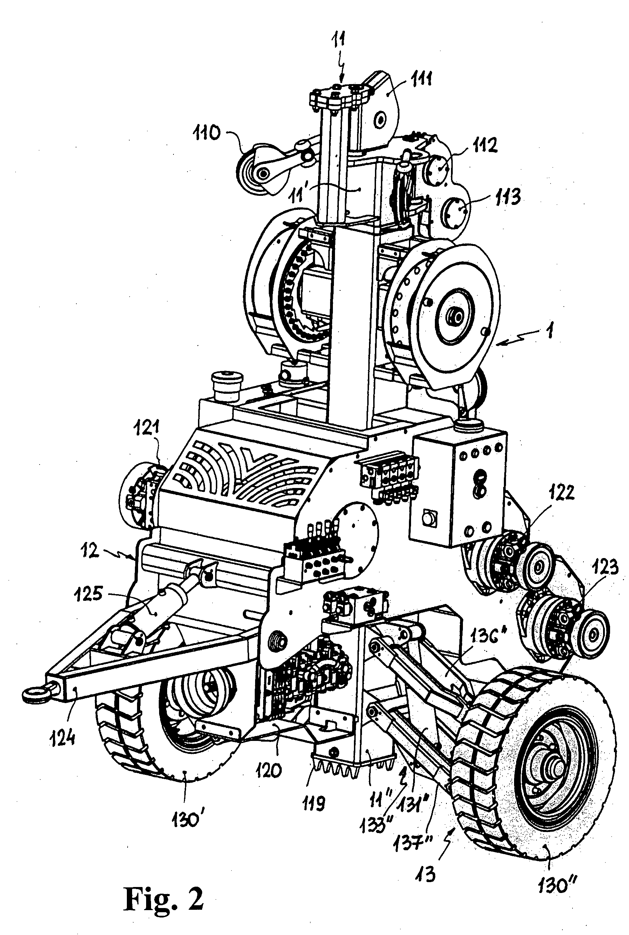

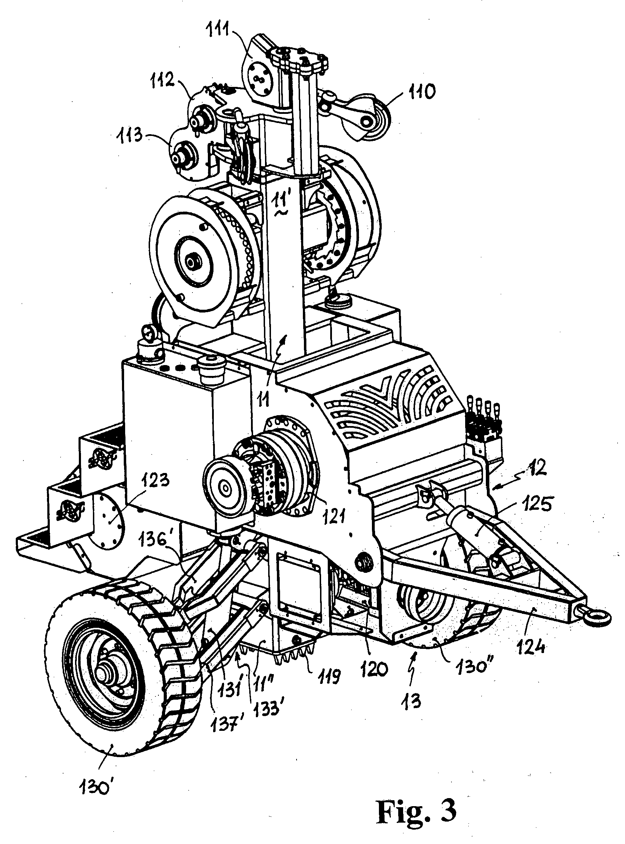

Said framework 12 (Figs. 2 and 3), which is firmly interconnected with said pylon 11, is adapted to receive winding drums 121, 122, 123, which are integrated therein and are hydraulically driven by means of a hydraulic pump 120 powered by said cardan joint shaft on the tractor T, and are used for coiling said suspension cable VN, reverse cable VP and towing cable VV.

Moreover, said driving assembly 1 of the skyline is furnished with the towing coupling 124, which is pivotally interconnected with said pylon 11 and said framework 12, and is generally intended for establishing each desired interconnection between the driving assembly 1 and the tractor T in order to enable both towing said driving assembly 1 along each terrain and also at least temporarily maintaining the driving assembly on each desired location by means of said tractor T. Said towing coupling 124 is pivotally interconnected with the hydraulic cylinder 125, which is therefore pivotally connectable to said three-point linkage on the tractor T and on the other hand also pivotally to the framework 12, so that by means of said towing coupling 124 and said hydraulic cylinder 125 the driving assembly 1 together with the pylon 11 can be pivoted in the longitudinal direction of the skyline.

The driving assembly 1 is moreover furnished with a chassis 13, which is equipped with wheels 130', 130" and is adapted for displacing the driving assembly 1 together with said pylon 11 and said framework 12 in the sense of towing thereof by means of the tractor T along each disposable ground P.

In addition to said driving assembly 1, the skyline further comprises a carriage 2, a suspension cable VN, a reverse cable VP, a towing cable VV and at least two tensioning cables VT1, VT2.

The carriage 2 (Fig. 1) is displaceable along said suspension cable VN and comprises at least two bearing pulleys 21', 21 ", by means of which the carriage 2 is supported on said suspension cable VN and guided during displacement to and fro along said suspension cable VN, at least two guiding pulleys 22', 22", which are arranged vertically below said bearing pulleys 21', 21" and serve for guiding of the reverse cable VP via said carriage 2, as well as a supporting pulley 23, which is arranged vertically below said guiding pulleys 22', 22" and inbetween, and is adapted for guiding and supporting the of towing cable VV together with each load B attached thereto.

Said suspension cable VN extends from each belonging winding drum 121 located within said framework 12 of the driving assembly 1 via a re-directing pulley 111 on the pylon 11 towards the first stationary point T1 on the terrain, to which said cable VN is attached, and serves for supporting and guiding the carriage 2, namely said bearing pulleys 21',21" of the carriage 2. The reverse cable VP extends from each belonging winding drum 122 located within said framework 12 of the driving assembly 1 via a re-directing pulley 112 on the pylon 11 and via the guiding pulleys 22', 22" on the carriage 2 towards a further re-directing pulley 220, which is arranged adjacent to said first stationary point T1, from which it is directed back to the carriage 2, to which it is attached. The towing cable VV extends from each belonging winding drum 123 located within said framework 12 of the driving assembly 1 via a re-directing pulley 113 on the pylon 11 and via said supporting pulley 23 on the carriage 2 towards each disposable load B, by which said towing cable VV is optionally interconnectable. Moreover, said skyline also comprises at least two sections VT1, VT2 of a tensioning cable, which extend between the tensioning pulley 110 on the end portion 11' of the pylon 11 apart from the ground P and at least two further stationary points T2, T3, which are located on the ground P apart from said tractor T and said driving assembly 1, wherein tensioning cable sections VT1, VT2 extend, relative to said driving assembly 1, at least essentially in the direction away from the first stationary point T1 and correspondingly apart from each other, just in order to enable efficiently anchoring of the pylon 11 in its vertical position when towing the load (Fig. 1).

The invention provides that (Figs 2 - 4) the chassis 13 of the driving assembly 1 comprises two wheels 130', 130", which are each per se pivotally connected with the pylon 11 with the possibility of adjusting each position of each particular wheel 130', 130" relative to said pylon 11 and also with the possibility of maintaining each wheel 130', 130" in each desired position relative to said pylon 11, by which on the one hand it can be adapted to each disposable ground P, and on the other hand also the pylon 11 can be displaced in the vertical direction for the purposes of transporting and/or anchoring and/or tilting thereof along the ground or relative to the ground P, by which said pylon 1 is leveled in the transversal plane. Besides, said pylon 11 is in the area of its bottom end portion 11", which is faced towards the ground P, adapted to be anchored by means of penetrating into the ground P due to total weight of the complete driving assembly 1.

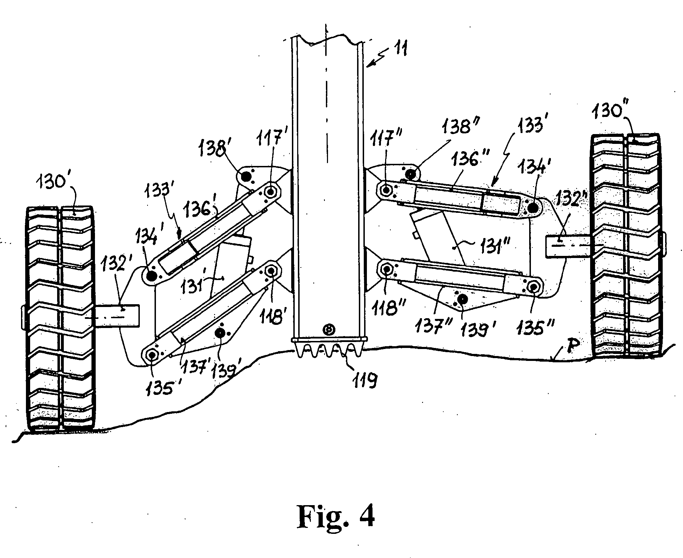

To this aim, each particular wheel 130', 130" is pivotally attached to the pylon 11 via a parallelogram linkage mechanism 133', 133", which is displaceable by means of a hydraulic cylinder 131', 131". Said parallelogram linkage mechanism 133', 133" suitable for connecting each wheel 130', 130" with said pylon 11 (Fig. 4) comprising:
- an upper pivot joint 117', 117" and a lower pivot joint 118', 118" which are arranged above each other on the pylon 11;
- an upper pivot joint 134', 134" and a lower pivot joint 135', 135" which are arranged above each other on each axle 132', 132" of each particular wheel 130', 130";
- an upper joint lever 136', 136" which is on the one hand pivotally connected to said upper pivot joint 134', 134" on said axle 132', 132" and on the other hand pivotally to the upper pivot joint 117', 117" on the pylon 11;
- an lower joint lever 137', 137" which is on the one hand pivotally connected to said lower pivot joint 135', 135" on said axle 132', 132" and on the other hand pivotally to the upper pivot joint 117', 117" on the pylon 11;
- a hydraulic cylinder 131', 131" which is on the one hand pivotally connected to an upper pivot joint 138', 138", which is arranged on the pylon 11 adjacent to the previously mentioned upper pivot joint 117', 117", and on the other hand also pivotally to a lower pivot joint 139', 139" which is located on said joint lever 137', 137" in the area between the lower pivot joint 135', 135" on said axle 131', 132" and the lower pivot joint 118', 118" on the pylon 11. Each joint lever 136', 136"; 137', 137" is preferably a double-arm or a fork-like lever.

The pylon 11 is furnished with at least one protrusion 119, which is arranged on its end portion 11", which is faced towards the ground P, and is intended to facilitate said penetration of the pylon 11 into the ground P. Moreover, in order to assure a desired height of the pylon 11, which shall in the practice exceed 6 m, said pylon 11 is preferably telescopically conceived and consists of two or more telescopic sections 110', 110", which are inserted into each other and displaceable relative to each other by means of a hydraulic cylinder, which is mounted in the interior of said pylon 11 and can also be telescopically conceived.

When the towing coupling 124 of the driving assembly is attached to the tractor T, wherein the hydraulic pump 120 is driven by means of the cardan joint shaft on the tractor T and the hydraulic cylinder 125 on said towing coupling 124 is interconnected with the three-point linkage on the tractor T, said driving assembly 1 supported by wheels 130', 130" is allowed to be transported to each desired location. In said location, the framework 12 and the pylon 11 firmly attached thereto are sank towards the ground P by means of mechanisms 133', 133", in particular by means of hydraulic cylinders 131', 131" on the chassis 13, so that the end portion 11' of the pylon 11 is resting on the ground P. Upon that, the pylon 11 is leveled in the longitudinal direction by means of said hydraulic cylinder 125 on the towing coupling 124, and also in the transversal direction by means of said cylinders 131', 131". Practically the total weight of the complete driving assembly 1 is acting towards the ground P in the area of the pylon 11, since the wheels 130', 130" serve more or less just for the purposes of maintaining equilibrium and stability. As soon as the pylon 11 is placed into its optimum position, the suspension cable VN can be extended from the belonging winding drum 121 via the pulley 111 towards each desired stationary point T1, upon which the carriage 2 can be placed thereon, via which the reverse cable VP can be extended from the belonging winding drum 122 via the pulley 112 and via the pulley 220 closely to said stationary point T1 where it is re-directed back to the carriage 2, upon which also the towing rope VV can be extended from the belonging winding drum 123 via the pulley 113 and via the pulley 23 on the carriage 2. Upon that, the pylon 11 is further stabilized in its position by means of the tensioning cable sections VT1, VT2, which extend via the pulley 110 in the pylon 11 apart from each other towards the stationary points T2, T3. Upon that, said suspension cable VN is tensioned by means of the belonging winding drum 121, upon which the carriage 2 starts hanging at certain distance above the ground P. The carriage 2 can be displaced towards the stationary point T1 by means of said reverse cable VP, which is all the time maintained in appropriately tensioned state. As soon as a load B is attached to the towing cable VV, coiling of the towing cable VV is performed, by which the load B is hoisted apart from the ground and displaced by means of said carriage 2 to each desired location. In this, the total weight of the complete driving assembly 1 including all forces resulting from said cables VN, VP, VV are transferred through the pylon 11 towards the ground P, wherein the pylon 11 is penetrated and firmly anchored in the ground P, and is moreover in the longitudinal direction supported by said tensioning cable sections VT1, VT2 and said suspension cable VN attached to the stationary point T1, but at the same time it is also reliably supported in the transversal direction both by means of wheels 130', 130" and said tensioning cable sections VT1, VT2 extending apart from each other.

## Claims

1. Forestry skyline, comprising
- a mobile driving assembly (1), which is adapted to be towed by means of a tractor (T) and is connectable in a detachable manner on the one hand with a three-point linkage on tractor (T) and on the other hand with a cardan joint shaft on said tractor (T),
wherein said driving assembly (1) includes
- a telescopically conceived pylon (11), which is on its first end portion (11') protruding apart from the ground (P) furnished with freely rotatable pulleys (111, 112, 113) for guiding a suspension cable (VN) used for supporting and guiding of a carriage (2) which is movable along said suspension cable (VN), and for guiding a reverse cable (VP) used for displacing said carriage (2), as well as for guiding a towing cable (VV) extended via said carriage (2) and used for towing each load (B);
- a framework (12), which is firmly connected with said pylon (11) and is furnished with winding drums (121, 122, 123), which are integrated therein and are each per se hydraulically driven by means of a hydraulic pump (120) powered by said cardan joint shaft on the tractor (T) and are each per se used for receiving and coiling of said suspension cable (VN), reverse cable (VP) and towing cable (VV);
- a towing coupling (124), which is pivotally connected with said framework (12) and pylon (11) and is used for establishing interconnection between the driving assembly (1) and the tractor (T) for the purposes of towing said driving assembly (1) along each terrain as well as for at least temporarily maintaining of said driving assembly (1) in each desired position by means of said tractor (T);
- a hydraulic cylinder (125), which is pivotally connected on the one hand with said towing coupling (124) and said three-point linkage on the tractor (T) and other hand with the framework (12), by which the pylon (11) can be pivoted in the longitudinal direction of the skyline; as well as
- a chassis (13), which is furnished with a pair of wheels (130', 130") and is used for transporting the driving assembly (1) with the framework (12) and the pylon (1) in the sense of towing by means of said tractor (T) along each disposable ground (P);
wherein such skyline further comprising
- a carriage (2), which is movable along said suspension cable (VN) and comprises at least two bearing pulleys (21', 21 ") used for supporting the carriage (2) when placed on said suspension cable (VN) as well as for guiding said carriage (2) along said suspension cable (VN), at least two guiding pulleys (22', 22") which are in the vertical direction of the skyline located below said bearing pulleys (21', 21 ") and are used for guiding of the reverse cable (VP) via said carriage (2), as well as a supporting pulley (23), which is in the vertical direction of the skyline located below and between said guiding pulleys (22', 22") and is used for supporting and guiding of the towing cable (VV) together with each disposable load (B); as well as
- said suspension cable (VN) extending from the belonging winding drum (121) located within said framework (12) of the driving assembly (1) via said redirecting pulley (111) on the pylon (11) towards the first stationary point (T1) on each terrain, to which it is attached, by which said suspension cable (VN) is used for supporting and guiding the carriage (2), namely said supporting pulleys (21', 21") of the carriage (2);
- said reverse cable (VP) extending from the belonging winding drum (122) located within said framework (12) of the driving assembly (1) via the belonging redirecting pulley (112) on the pylon (11) and via said guiding pulleys (22', 22") on the carriage (2) towards a further re-directing pulley (220) arranged adjacent to said first stationary point (T1), where it is re-directed back to the carriage (2), to which it is then attached;
- said towing cable (VP) extending from the belonging winding drum (123) located within said framework (12) of the driving assembly (1) via the belonging redirecting pulley (113) on the pylon (11) and via said supporting pulley (23) on the carriage (2) towards each disposable load (B), with which said towing cable (VP) is optionally connected;
and moreover
- at least two tensioning cable sections (VT1, VT2), which each per se extend between a tensioning pulley (110), which is located on the first end portion (11') of the pylon (11) protruding away from the ground (P), and two further stationary points (T2, T3) located on the ground (P) apart from the tractor (T) and the driving assembly (1) in direction opposite to said first stationary point (T1) and apart from each other, by which appropriate anchoring of the pylon (11) in its vertical or slanted position is enabled by towing each load (B),
**characterized in that** said chassis (13) is furnished with a pair of wheels (130', 130"), which are each per se pivotally connected with the pylon (11) with the possibility of adjusting position of each wheel (130', 130") relative to said pylon (11) with the possibility of maintaining each particular wheel (130', 130") in each desired position, on the one hand for the purposes of adaptation to each disposable configuration of ground (B) and on the other hand due to vertically displacing said pylon (11) for the purposes of transporting and/or anchoring and/or pivoting thereof on each ground (P), namely due to leveling the pylon (11) in the transversal direction, **and in that** the second end portion (11") of said pylon (11), which is faced towards the ground (P), is adapted for anchoring of the pylon (11) by means of penetrating thereof into the ground (P) due to the total weight of said driving assembly (1).

2. Forestry skyline according to Claim 1, **characterized in that** each wheel (130', 130") of the chassis (13) of the driving assembly (1) is pivotally connected to the pylon (11) via a parallelogram mechanism (133', 133"), which is actuated by means of a hydraulic cylinder (131', 131 ").

3. Forestry skyline according to Claim 2, **characterized in that** said parallelogram mechanism (133', 133") for establishing interconnection between each particular wheel (130', 130") with the pylon (11) comprises
- an upper pivot joint (117', 117") and an lower pivot joint (118', 118") which are arranged above each other on the pylon (11);
- an upper pivot joint (134', 134") and a lower pivot joint (135', 135") which are arranged above each other on the axle (132', 132") of each wheel (130', 130");
- an upper joint lever (136', 136"), which is on the one hand pivotally connected with the upper pivot point (134', 134") on the axle (132', 132") and on the other hand also pivotally with the upper pivot joint (117', 117") on the pylon (11);
- an lower joint lever (137', 137"), which is on the one hand pivotally connected with the lower pivot point (135', 135") on the axle (132', 132") and on the other hand also pivotally with the lower pivot joint (118', 118") on the pylon (11); and
- a hydraulic cylinder (131', 131"), which is on the one hand pivotally connected with a pivot joint (138', 138") arranged on the pylon (11) adjacent to the previously mentioned upper pivot joint (117', 117"), and on the other hand also pivotally with a further pivot point (139', 139") arranged on the lower joint lever (137', 137") in the area between its pivot joint (135', 135") on the axle (132', 132") and its pivot joint (118', 118") on the pylon (11).

4. Forestry skyline according to Claim 3, **characterized in that** each joint lever (136', 136"; 137', 137") is conceived as a double-arm i.e. fork-like lever.

5. Forestry skyline according to anyone of the preceding Claims, **characterized in that** said pylon (11) is furnished with at least one protrusion (119), which is arranged on its second end portion (11"), which is faced towards the ground (P), and which is adapted to facilitate penetration of the pylon (11) into the ground (P).

6. Forestry skyline according to anyone of the preceding Claims, **characterized in that** said pylon (11) is telescopically conceived and consists of two or more telescopic sections (110', 110"), which are inserted into each other and displaceable relative to each other by means of a hydraulic cylinder, which is mounted in the interior of said pylon (11).

7. Forestry skyline according to Claim 6, **characterized in that** said hydraulic cylinder is telescopically conceived.

8. Driving assembly (1) of a skyline according to anyone of Claims 1 - 7, **characterized in that** it comprises a chassis (13), which is furnished with a pair of wheels (130', 130"), which are each per se pivotally connected with the pylon (11) with the possibility of adjusting position of each wheel (130', 130") relative to said pylon (11) with the possibility of maintaining each particular wheel (130', 130") in each desired position, on the one hand for the purposes of adaptation to each disposable configuration of ground (B) and on the other hand due to vertically displacing said pylon (11) for the purposes of transporting and/or anchoring and/or pivoting thereof on each ground (P), namely due to leveling the pylon (11) in the transversal direction, **and in that** the second end portion (11") of said pylon (11), which is faced towards the ground (P), is adapted for anchoring of the pylon (11) by means of penetrating thereof into the ground (P) due to the total weight of said driving assembly (1).

9. Driving assembly according to Claim 8, **characterized in that** each wheel (130', 130") of the chassis (13) of the driving assembly (1) is pivotally connected to the pylon (11) via a parallelogram mechanism (133', 133"), which is actuated by means of a hydraulic cylinder (131', 131 ").

10. Driving assembly according to Claim 9, **characterized in that** said parallelogram mechanism (133', 133") for establishing interconnection between each particular wheel (130', 130") with the pylon (11) comprises
- an upper pivot joint (117', 117") and an lower pivot joint (118', 118") which are arranged above each other on the pylon (11);
- an upper pivot joint (134', 134") and an lower pivot joint (135', 135") which are arranged above each other on the axle (132', 132") of each particular wheel (130', 130");
- an upper joint lever (136', 136"), which is on the one hand pivotally connected with the upper pivot point (134', 134") on the axle (132', 132") and on the other hand also pivotally with the upper pivot joint (117', 117") on the pylon (11);
- an lower joint lever (137', 137"), which is on the one hand pivotally connected with the lower pivot point (135', 135") on the axle (132', 132") and on the other hand also pivotally with the lower pivot joint (118', 118") on the pylon (11);
and moreover
- a hydraulic cylinder ((131', 131"), which is on the one hand pivotally connected with a pivot joint (138', 138") arranged on the pylon (11) adjacent to the previously mentioned upper pivot joint (117', 117"), and on the other hand also pivotally with a further pivot point (139', 139") arranged on the lower joint lever (137', 137") in the area between its pivot joint (135', 135") on the axle (132', 132") and its pivot joint 118', 118") on the pylon (11).

11. Driving assembly according to Claim 10, **characterized in that** each joint lever (136', 136"; 137', 137") is conceived as a double-arm i.e. fork-like lever.

12. Driving assembly according to anyone of Claims 8 - 11, **characterized in that** said pylon (11) is furnished with at least one protrusion (119), which is arranged on its second end portion (11"), which is faced towards the ground (P), and which is adapted to facilitate penetration of the pylon (11) into the ground (P).

13. Driving assembly according to anyone of Claims 8 - 12, **characterized in that** said pylon (11) is telescopically conceived and consists of two or more telescopic sections (110', 110"), which are inserted into each other and displaceable relative to each other by means of a hydraulic cylinder, which is mounted in the interior of said pylon (11).

14. Driving assembly according to Claim 13, **characterized in that** said hydraulic cylinder is telescopically conceived.

## Patentansprüche

1. Forstwirtschaftlicher Seilkran, der Folgendes umfasst:
- eine mobile Antriebsanordnung (1), die dafür ausgelegt ist, mittels eines Traktors (T) geschleppt zu werden, und die in einer abtrennbaren Weise einerseits mit einer Dreipunktaufhängung am Traktor (T) und andererseits mit einer Kardangelenkwelle an dem Traktor (T) verbunden werden kann,
wobei die Antriebsanordnung (1) Folgendes aufweist:
- einen Teleskoppfeiler (11), der an seinem ersten Endabschnitt (11'), der vom Boden (P) absteht, mit frei drehbaren Seilscheiben (111, 112, 113) versehen ist, um ein Aufhängungsseil (VN) zu führen, das zum Stütze und Führen eines Schlittens (2) verwendet wird, der entlang des Aufhängungsseils (VN) beweglich ist, und um ein Rücklaufseil (VP) zu führen, das zum Verschrieben des Schlittens (2) verwendet wird, sowie ein Schleppkabel (VV) zu führen, das über den Schlitten (2) geführt wird und zum Schleppen jeglicher Lasten (B) verwendet wird;
- einen Rahmen (12), der fest mit dem Pfeiler (11) verbunden ist und mit Wickeltrommeln (121, 122, 123) versehen ist, die darin integriert sind und jede für sich hydraulisch mittels einer Hydraulikpumpe (120) angetrieben wird, die durch die Kardangelenkwelle an dem Traktor (T) angetrieben wird, und jede für sich zum Aufnehmen und Aufwickeln des Aufhängungsseils (VN), des Rücklaufseils (VP) und des Schleppkabels (VV) verwendet wird;
- eine Schleppkupplung (124), die an dem Rahmen (12) und dem Pfeiler (11) angelenkt ist und dafür verwendet wird, eine Verbindung zwischen der Antriebsanordnung (1) und dem Traktor (T) herzustellen, um die Antriebsanordnung (1) über jedes Gelände zu schleppen und um die Antriebsanordnung (1) mindestens vorübergehend mittels des Traktors (T) in jeder gewünschten Position zu halten;
- einen Hydraulikzylinder (125), der einerseits an der Schleppkupplung (124) und der Dreipunktaufhängung an dem Traktor (T) und andererseits an dem Rahmen (12) angelenkt ist und mit dem der Pfeiler (11) in der Längsrichtung des Seilkrans geschwenkt werden kann; sowie
- ein Fahrgestell (13), das mit einem Paar Räder (130', 130") versehen ist und dafür verwendet wird, die Antriebsanordnung (1) mit dem Rahmen (12) und dem Pfeiler (1) in der Schlepprichtung mittels des Traktors (T) entlang jedes verfügbaren Bodens (P) zu transportieren;
wobei der Seilkran des Weiteren Folgendes umfasst:
- einen Schlitten (2), der entlang des Aufhängungsseils (VN) beweglich ist und mindestens zwei tragende Seilscheiben (21', 21") umfasst, die dafür verwendet werden, den Schlitten (2) zu stützen, wenn er an dem Aufhängungsseil (VN) angeordnet ist, sowie um den Schlitten (2) entlang des Aufhängungsseils (VN) zu führen, wobei sich mindestens zwei Führungsseilscheiben (22', 22") in der vertikalen Richtung des Seilkrans unter den tragenden Seilscheiben (21', 21") befinden und dafür verwendet werden, das Rücklaufseil (VP) über den Schlitten (2) zu führen, sowie eine Stützseilscheibe (23) umfasst, die sich in der vertikalen Richtung des Seilkrans unter und zwischen den Führungsseilscheiben (22', 22") befindet und dafür verwendet wird, das Schleppkabel (VV) zusammen mit jeder verfügbaren Last (B) zu stützen und zu führen; sowie
- das Aufhängungsseil (VN), das sich von der zugehörigen Wickeltrommel (121), die sich innerhalb des Rahmens (12) der Antriebsanordnung (1) befindet, über die Umlenkseilscheibe (111) an dem Pfeiler (11) zum dem ersten stationären Punkt (T1) auf jedem Gelände, an dem es befestigt ist, erstreckt, wobei das Aufhängungsseil (VN) zum Stützen und Führen des Schlittens (2), und zwar der Stützseilscheiben (21', 21") des Schlittens (2), verwendet wird;
- das Rücklaufseil (VP), das sich von der zugehörigen Wickeltrommel (122), die sich innerhalb des Rahmens (12) der Antriebsanordnung (1) befindet, über die zugehörige Umlenkseilscheibe (112) an dem Pfeiler (11) und über die Führungsseilscheiben (22', 22") an dem Schlitten (2) zu einer weiteren Umlenkseilscheibe (220), die neben dem ersten stationären Punkt (T1) angeordnet ist, erstreckt, wo es zu dem Schlitten (2) zurückgeführt wird, an dem es dann befestigt ist;
- das Schleppkabel (VP), das sich von der zugehörigen Wickeltrommel (123), die sich innerhalb des Rahmens (12) der Antriebsanordnung (1) befindet, über die zugehörige Umlenkseilscheibe (113) an dem Pfeiler (11) und über die Stützseilscheibe (23) an dem Schlitten (2) zu jeder verfügbaren Last (B) erstreckt, mit der das Schleppkabel (VP) optional verbunden ist; und darüber hinaus
- mindestens zwei Spannseilabschnitte (VT1, VT2), die sich jeder für sich zwischen einer Spannseilscheibe (110), die sich an dem ersten Endabschnitt (11') des Pfeilers (11), der von dem Boden (P) absteht, befindet, und zwei weiteren stationären Punkten (T2, T3), die sich am Boden (P) in einer Entfernung von dem Traktor (T) und der Antriebsanordnung (1) in einer Richtung, die dem ersten stationären Punkt (T1) entgegengesetzt ist, und in einem Abstand voneinander befinden, erstrecken, wodurch eine zweckmäßige Verankerung des Pfeilers (11) in seiner vertikalen oder geneigten Position durch Schleppen jeglicher Lasten (B) ermöglicht wird,
**dadurch gekennzeichnet, dass** das Fahrgestell (13) mit einem Paar Räder (130', 130") versehen ist, die jedes für sich an dem Pfeiler (11) angelenkt sind, wobei die Möglichkeit besteht, die Position jedes Rades (130', 130") relativ zu dem Pfeiler (11) einzustellen, wobei die Möglichkeit besteht, jedes einzelne Rad (130', 130") in jeder gewünschten Position zu halten, um einerseits eine Anpassung an jede verfügbare Ausgestaltung des Bodens (B) vorzunehmen und um andererseits, aufgrund der vertikalen Verschiebung des Pfeilers (11), seinen Transport und/oder seine Verankerung und/oder sein Schwenken auf jedem Boden (P) zu ermöglichen, und zwar aufgrund der Nivellierung des Pfeilers (11) in der Querrichtung, und **dadurch gekennzeichnet, dass** der zweite Endabschnitt (11") des Pfeilers (11), der zum Boden (P) weist, dafür ausgelegt ist, den Pfeiler (11) mittels Eindringen des Pfeilers in den Boden (P) aufgrund des Gesamtgewichts der Antriebsanordnung (1) zu verankern.

2. Forstwirtschaftlicher Seilkran nach Anspruch 1, **dadurch gekennzeichnet, dass** jedes Rades (130', 130") des Fahrgestells (13) der Antriebsanordnung (1) an dem Pfeiler (11) über einen Parallelogrammmechanismus (133', 133") angelenkt ist, der mittels eines Hydraulikzylinders (131', 131") betätigt wird.

3. Forstwirtschaftlicher Seilkran nach Anspruch 2, **dadurch gekennzeichnet, dass** der Parallelogrammmechanismus (133', 133") zum Herstellen einer Verbindung zwischen jedem einzelnen Rad (130', 130") mit dem Pfeiler (11) Folgendes umfasst:
- ein oberes Drehgelenk (117', 117") und ein unteres Drehgelenk (118', 118"), die übereinander an dem Pfeiler (11) angeordnet sind;
- ein oberes Drehgelenk (134', 134") und ein unteres Drehgelenk (135', 135"), die übereinander an der Achse (132', 132") jedes Rades (130', 130") angeordnet sind;
- einen oberen Querlenker (136', 136"), der einerseits an dem oberen Schwenkpunkt (134', 134") an der Achse (132', 132") angelenkt ist und andererseits ebenfalls an dem oberen Drehgelenk (117', 117") an dem Pfeiler (11) angesenkt ist;
- einen unteren Querlenker (137', 137"), der einerseits an dem unteren Schwenkpunkt (135', 135") an der Achse (132', 132") angelenkt ist und andererseits ebenfalls an dem unteren Drehgelenk (118', 118") an dem Pfeiler (11) angelenkt ist; und
- einen Hydraulikzylinder (131', 131 "), der einerseits an einem Drehgelenk (138', 138") angelenkt ist, das an dem Pfeiler (11) neben dem zuvor erwähnten oberen Drehgelenk (117', 117") angeordnet ist, und andererseits ebenfalls an einem weiteren Schwenkpunkt (139', 139") angelenkt ist, der an dem unteren Querlenker (137', 137") in dem Bereich zwischen seinem Drehgelenk (135', 135") an der Achse (132', 132") und seinem Drehgelenk (118', 118") an dem Pfeiler (11) angeordnet ist.

4. Forstwirtschaftlicher Seilkran nach Anspruch 3, **dadurch gekennzeichnet, dass** jeder Querlenker (136', 136"; 137', 137") als ein doppelarmiger, d. h. gabelartiger, Lenker ausgelegt ist.

5. Forstwirtschaftlicher Seilkran nach einem der vorangehenden Ansprüche, **dadurch gekennzeichnet, dass** der Pfeiler (11) mit mindestens einem Vorsprung (119) versehen ist, der an seinem zweiten Endabschnitt (11"), der dem Boden (P) zugewandt ist, angeordnet ist, und der dafür ausgelegt ist, das Eindringen des Pfeilers (11) in den Boden (P) zu erleichtern.

6. Forstwirtschaftlicher Seilkran nach einem der vorangehenden Ansprüche, **dadurch gekennzeichnet, dass** der Pfeiler (11) teleskopisch ausgelegt ist und aus zwei oder mehr Teleskopsektionen (110', 110") besteht, die ineinander geschoben sind und relativ zueinander mittels eines Hydraulikzylinders, der im Inneren des Pfeilers (11) montiert ist, verschoben werden können.

7. Forstwirtschaftlicher Seilkran nach Anspruch 6, **dadurch gekennzeichnet, dass** der Hydraulikzylinder teleskopisch ausgelegt ist.

8. Antriebsanordnung (1) eines Seilkrans nach einem der Ansprüche 1-7, **dadurch gekennzeichnet, dass** sie ein Fahrgestell (13) umfasst, das mit einem Paar Räder (130', 130") versehen ist, die jedes für sich an dem Pfeiler (11) angelenkt sind, wobei die Möglichkeit besteht, die Position jedes Rades (130', 130") relativ zu dem Pfeiler (11) einzustellen, wobei die Möglichkeit besteht, jedes einzelne Rad (130', 130") in jeder gewünschten Position zu halten, um einerseits eine Anpassung an jede verfügbare Ausgestaltung des Bodens (B) vorzunehmen und um andererseits, aufgrund der vertikalen Verschiebung des Pfeilers (11), seinen Transport und/oder seine Verankerung und/oder sein Schwenken auf jedem Boden (P) zu ermöglichen, und zwar aufgrund der Nivellierung des Pfeilers (11) in der Querrichtung, und **dadurch gekennzeichnet, dass** der zweite Endabschnitt (11") des Pfeilers (11), der zum Boden (P) weist, dafür ausgelegt ist, den Pfeiler (11) mittels Eindringen des Pfeilers in den Boden (P) aufgrund des Gesamtgewichts der Antriebsanordnung (1) zu verankern.

9. Antriebsanordnung nach Anspruch 8, **dadurch gekennzeichnet, dass** jedes Rades (130', 130") des Fahrgestells (13) der Antriebsanordnung (1) an dem Pfeiler (11) über einen Parallelogrammmechanismus (133', 133") angelenkt ist, der mittels eines Hydraulikzylinders (131', 131") betätigt wird.

10. Antriebsanordnung nach Anspruch 9, **dadurch gekennzeichnet, dass** der Parallelogrammmechanismus (133', 133") zum Herstellen einer Verbindung zwischen jedem einzelnen Rad (130', 130") mit dem Pfeiler (11) Folgendes umfasst:
- ein oberes Drehgelenk (117', 117") und ein unteres Drehgelenk (118', 118"), die übereinander an dem Pfeiler (11) angeordnet sind;
- ein oberes Drehgelenk (134', 134") und ein unteres Drehgelenk (135', 135"), die übereinander an der Achse (132', 132") jedes einzelnen Rades (130', 130") angeordnet sind;
- einen oberen Querlenker (136', 136"), der einerseits an dem oberen Schwenkpunkt (134', 134") an der Achse (132', 132") angelenkt ist und andererseits ebenfalls an dem oberen Drehgelenk (117', 117") an dem Pfeiler (11) angelenkt ist;
- einen unteren Querlenker (137', 137"), der einerseits an dem unteren Schwenkpunkt (135', 135") an der Achse (132', 132") angelenkt ist und andererseits ebenfalls an dem unteren Drehgelenk (118', 118") an dem Pfeiler (11) angelenkt ist;
und darüber hinaus
- einen Hydraulikzylinder (131', 131 "), der einerseits an einem Drehgelenk (138', 138") angelenkt ist, das an dem Pfeiler (11) neben dem zuvor erwähnten oberen Drehgelenk (117', 117") angeordnet ist, und andererseits ebenfalls an einem weiteren Schwenkpunkt (139', 139") angelenkt ist, der an dem unteren Querlenker (137', 137") in dem Bereich zwischen seinem Drehgelenk (135', 135") an der Achse (132', 132") und seinem Drehgelenk (118', 118") an dem Pfeiler (11) angeordnet ist.

11. Antriebsanordnung nach Anspruch 10, **dadurch gekennzeichnet, dass** jeder Querlenker (136', 136"; 137', 137") als ein doppelarmiger, d. h. gabelartiger, Lenker ausgelegt ist.

12. Antriebsanordnung nach einem der Ansprüche 8-11, **dadurch gekennzeichnet, dass** der Pfeiler (11) mit mindestens einem Vorsprung (119) versehen ist, der an seinem zweiten Endabschnitt (11"), der dem Boden (P) zugewandt ist, angeordnet ist, und der dafür ausgelegt ist, das Eindringen des Pfeilers (11) in den Boden (P) zu erleichtern.

13. Antriebsanordnung nach einem der Ansprüche 8-12, **dadurch gekennzeichnet, dass** der Pfeiler (11) teleskopisch ausgelegt ist und aus zwei oder mehr Teleskopsektionen (110', 110") besteht, die ineinander geschoben sind und relativ zueinander mittels eines Hydraulikzylinders, der im Inneren des Pfeilers (11) montiert ist, verschoben werden können.

14. Antriebsanordnung nach Anspruch 13, **dadurch gekennzeichnet, dass** der Hydraulikzylinder teleskopisch ausgelegt ist.

## Revendications

1. Câble aérien forestier, comprenant
- un ensemble d'entrainement mobile (1), qui est conçu pour être tracté au moyen d'un tracteur (T) et qui peut être raccordé de manière détachable d'une part à un attelage trois points situé sur un tracteur (T) et d'autre part à un arbre à cardan situé sur ledit tracteur (T),
dans lequel ledit ensemble d'entrainement (1) comprend
- un mât (11) conçu de manière télescopique, qui est, sur sa première partie extrémité (11') érigée éloignée du sol (P), muni de poulies à rotation libre (111, 112, 113) permettant de guider un câble de suspension (VN) utilisé pour supporter et guider un chariot (2) qui est mobile le long dudit câble de suspension (VN), et permettant de guider un câble à va-et-vient (VP) utilisé pour déplacer ledit chariot (2), ainsi que pour guider un câble de halage (VV) passant par ledit chariot (2) et utilisé pour haler un charge (B) respective ;
- une structure (12), qui est solidement raccordée audit mât (11) et est munie de tambours d'enroulement (121, 122, 123), qui sont intégrés en son sein et sont respectivement essentiellement entraînés de manière hydraulique au moyen d'une pompe hydraulique (120) alimentée par ledit arbre à cardan situé sur le tracteur (T) et sont respectivement essentiellement utilisés pour recevoir et bobiner lesdits câble de suspension (VN), câble à va-et-vient (VP) et câble de halage (VV) ;
- un accouplement de traction (124), qui est raccordé pivotant à ladite structure (12) et audit mât (11) et est utilisé pour établir une interconnexion entre l'ensemble d'entrainement (1) et le tracteur (T) à des fins de traction dudit ensemble d'entrainement (1) le long d'un terrain respectif ainsi que pour maintenir de manière au moins temporaire ledit ensemble d'entrainement (1) dans une position souhaitée respective au moyen dudit tracteur (T) ;
- un vérin hydraulique (125), qui est raccordé pivotant d'une part audit accouplement de traction (124) et audit attelage trois points situé sur le tracteur (T) et d'autre part à la structure (12), ce qui permet de pivoter le mât (11) dans la direction longitudinale du câble aérien ; ainsi que
- un châssis (13), qui est muni d'une paire de roues (130', 130") et est utilisé pour transporter l'ensemble d'entrainement (1) avec la structure (12) et le mât (1) sous la forme d'une traction au moyen dudit tracteur (T) le long d'un sol (P) disponible respectif ;
dans lequel un tel câble aérien comprend en outre
- un chariot (2), qui est mobile le long dudit câble de suspension (VN) et comprend au moins deux poulies porteuses (21', 21") utilisées pour supporter le chariot (2) lorsqu'il est placé sur ledit câble de suspension (VN) ainsi que pour guider ledit chariot (2) le long dudit câble de suspension (VN), au moins deux poulies de guidage (22', 22") qui, dans la direction verticale du câble aérien, sont situées sous lesdites poulies porteuses (21', 21") et sont utilisées pour guider le câble à va-et-vient (VP) via ledit chariot (2), ainsi qu'une poulie de support (23), qui, dans la direction verticale du câble aérien, est située sous et entre lesdites poulies de guidage (22', 22") et est utilisée pour supporter et guider le câble de halage (VV) en même temps qu'une charge (B) disponible respective ; ainsi que
- ledit câble de suspension (VN) s'étendant à partir du tambour d'enroulement (121) associé situé au sein de ladite structure (12) de l'ensemble d'entrainement (1), via ladite poulie de redirection (111) située sur le mât (11), en direction du premier point fixe (T1) situé sur un terrain respectif et auquel il est attaché, ce qui permet d'utiliser ledit câble de suspension (VN) pour supporter et guider le chariot (2), c'est à dire lesdites poulies porteuses (21', 21") du chariot (2) ;
- ledit câble à va-et-vient (VP) s'étendant à partir du tambour d'enroulement (122) associé situé au sein de ladite structure (12) de l'ensemble d'entrainement (1), via la poulie de redirection (112) associée située sur le mât (11) et via lesdites poulies de guidage (22', 22") situées sur le chariot (2), en direction d'une autre poulie de redirection (220) agencée adjacente audit premier point fixe (T1), où il est redirigé vers le chariot (2) auquel il est ensuite attaché ;
- ledit câble de halage (VP) s'étendant à partir du tambour d'enroulement (123) associé situé au sein de ladite structure (12) de l'ensemble d'entrainement (1), via la poulie de redirection (113) associée située sur le mât (11) et via ladite poulie de support (23) située sur le chariot (2) en direction d'une charge (B) disponible respective à laquelle ledit câble de halage (VP) est éventuellement raccordé ;
et de plus
- au moins deux sections de câble de mise en tension (VT1, VT2), qui s'étendent respectivement entre une poulie de mise en tension (110), qui est située sur la première partie extrémité (11') du mât (11) érigée éloignée du sol (P), et deux autres points fixes (T2, T3) situés sur le sol (P) et séparés du tracteur (T) et de l'ensemble d'entrainement (1) dans une direction opposée audit premier point fixe (T1) et séparés l'un de l'autre, ce qui permet un ancrage approprié du mât (11) dans sa position verticale ou inclinée lors du halage d'une charge (B) respective,
**caractérisé en ce que** ledit châssis (13) est muni d'une paire de roues (130', 130"), qui sont respectivement essentiellement raccordées pivotantes au mât (11) avec la possibilité d'ajuster une position d'une roue (130', 130") respective par rapport audit mât (11) avec la possibilité de maintenir une roue (130', 130") individuelle respective dans une position souhaitée respective, d'une part à des fins d'adaptation à une configuration disponible respective de sol (B) et d'autre part, pour un déplacement vertical dudit mât (11), à des fins de transport et/ou d'ancrage et/ou de pivotement de celui-ci sur un sol (P) respectif, c'est-à-dire pour un calage du mât (11) dans la direction transversale, et **caractérisé en ce que** la deuxième partie extrémité (11') dudit mât (11) qui est orientée vers le sol (P) est conçue pour un ancrage du mât (11) au moyen d'une pénétration de celui-ci dans le sol (P) du fait du poids total dudit ensemble d'entrainement (1).

2. Câble aérien forestier selon la revendication 1, **caractérisé en ce que** chaque roue (130', 130") du châssis (13) de l'ensemble d'entrainement (1) est raccordée pivotante au mât (11) via un mécanisme à parallélogramme (133', 133") qui est actionné au moyen d'un vérin hydraulique (131', 131").

3. Câble aérien forestier selon la revendication 2, **caractérisé en ce que** ledit mécanisme à parallélogramme (133', 133") permettant d'établir une interconnexion entre une roue (130', 130") individuelle respective et le mât (11) comprend
- une articulation à pivot supérieure (117', 117") et une articulation à pivot inférieure (118', 118") qui sont agencées l'une au-dessus de l'autre sur le mât (11);
- une articulation à pivot supérieure (134', 134") et une articulation à pivot inférieure (135', 135") qui sont agencées l'une au-dessus de l'autre sur l'axe (132', 132") d'une roue (130', 130") respective ;
- un bras d'articulation supérieur (136', 136"), qui est d'une part raccordé pivotant sur l'axe (132', 132") grâce au point de pivot supérieur (134', 134") et est d'autre part raccordé également pivotant sur le mât (11) grâce à l'articulation à pivot supérieure (117', 117") ;
- un bras d'articulation inférieur (137', 137"), qui est d'une part raccordé pivotant sur l'axe (132', 132") grâce au point de pivot inférieur (135', 135") et d'autre part raccordé également pivotant sur le mât (11) grâce à l'articulation à pivot inférieure (118', 118") ; et
- un vérin hydraulique (131', 131"), qui est d'une part raccordé pivotant grâce à une articulation à pivot (138', 138") agencée sur le mât (11) adjacente à l'articulation à pivot supérieure (117', 117") mentionnée ci-dessus, et d'autre part raccordé également pivotant grâce à un autre point de pivot (139', 139") agencé sur le bras d'articulation inférieur (137', 137") dans la zone située entre son articulation à pivot (135', 135") sur l'axe (132', 132") et son articulation à pivot (118', 118") sur le mât (11).

4. Câble aérien forestier selon la revendication 3, **caractérisé en ce que** chaque bras d'articulation (136', 138" ; 137', 137") est conçu sous la forme d'un bras double, c'est-à-dire un bras de type fourche.

5. Câble aérien forestier selon l'une quelconque des revendications précédentes, **caractérisé en ce que** ledit mât (11) est muni d'au moins une partie saillante (119) qui est agencée sur sa deuxième partie extrémité (11") orientée vers le sol (P) et qui est conçue pour faciliter une pénétration du mât (11) dans le sol (P).

6. Câble aérien forestier selon l'une quelconque des revendications précédentes, **caractérisé en ce que** ledit mât (11) est conçu de manière télescopique et est constitué de deux ou plus de deux sections télescopiques (110', 110") qui sont insérées l'une dans l'autre ou les unes dans les autres et qui peuvent être déplacées l'une par rapport à l'autre ou les unes par rapport aux autres au moyen d'un vérin hydraulique installé à l'intérieur dudit mât (11).

7. Câble aérien forestier selon la revendication 6, **caractérisé en ce que** ledit vérin hydraulique est conçu de manière télescopique.

8. Ensemble d'entrainement (1) d'un câble aérien selon l'une quelconque des revendications 1 à 7, **caractérisé en ce qu'**il comprend un châssis (13), qui est muni d'une paire de roues (130', 130") qui sont respectivement essentiellement raccordées pivotantes au mât (11) avec la possibilité d'ajuster une position d'une roue (130', 130") respective par rapport audit mât (11) avec la possibilité de maintenir une roue (130', 130") individuelle respective dans une position souhaitée respective, d'une part à des fins d'adaptation à une configuration disponible respective de sol (B) et d'autre part, pour un déglacement vertical dudit mât (11), à des fins de transport et/ou d'ancrage et/ou de pivotement de celui-ci sur un sol (P) respectif, c'est-à-dire pour un calage du mât (11) dans la direction transversale, et **caractérisé en ce que** la deuxième partie extrémité (11") dudit mât (11) qui est orientée vers le sol (P) est conçue pour un ancrage du mât (11) au moyen d'une pénétration de celui-ci dans le sol (P) du fait du poids total dudit ensemble d'entrainement (1).

9. Ensemble d'entrainement selon la revendication 8, **caractérisé en ce que** chaque roue (130', 130") du châssis (13) de l'ensemble d'entrainement (1) est raccordée pivotante au mât (11) via un mécanisme à parallélogramme (133', 133") qui est actionné au moyen d'un vérin hydraulique (131', 131").

10. Ensemble d'entrainement selon la revendication 9, **caractérisé en ce que** ledit mécanisme à parallélogramme (133', 133") permettant d'établir une interconnexion entre une roue (130', 130") individuelle respective et le mât (11) comprend
- une articulation à pivot supérieure (117', 117") et une articulation à pivot inférieure (118', 118") qui sont agencées l'une au-dessus de l'autre sur le mât (1) ;
- une articulation à pivot supérieure (134', 134") et une articulation à pivot inférieure (135', 135") qui sont agencées l'une au-dessus de l'autre sur l'axe (132', 132") d'une roue (130', 130") individuelle respective ;
- un bras d'articulation supérieur (136', 136"), qui est d'une part raccordé pivotant sur l'axe (132', 132") grâce au point de pivot supérieur (134', 134") et est d'autre part raccordé également pivotant sur le mât (11) grâce à l'articulation à pivot supérieure (117', 117") ;
- un bras d'articulation inférieur (137', 137"), qui est d'une part raccordé pivotant sur l'axe (132', 132") grâce au point de pivot inférieur (135', 135") et d'autre part raccordé également pivotant sur le mât (11) grâce à l'articulation à pivot inférieure (118', 118") ;
et de plus
- un vérin hydraulique (131', 131"), qui est d'une part raccordé pivotant grâce à une articulation à pivot (138', 138") agencée sur le mât (11) adjacente à l'articulation à pivot supérieure (117', 117") mentionnée ci-dessus, et d'autre part raccordé également pivotant grâce à un autre point de pivot (139', 139") agencé sur le bras d'articulation inférieur (137', 137") dans la zone située entre son articulation à pivot (135', 135") sur l'axe (132', 132") et son articulation à pivot (118', 118") sur le mât (11).

11. Ensemble d'entrainement selon la revendication 10, **caractérisé en ce que** chaque bras d'articulation (136', 136" ; 137', 137") est conçu sous la forme d'un bras double c'est-à-dire d'un bras de type fourche.

12. Ensemble d'entrainement selon l'une quelconque des revendications 8 à 11, **caractérisé en ce que** ledit mât (11) est muni d'au moins une partie saillante (119) qui est agencée sur sa deuxième partie extrémité (11") orientée vers le sol (P) et qui est conçue pour faciliter une pénétration du mât (11) dans le sol (P).

13. Ensemble d'entrainement selon l'une quelconque des revendications 8 à 12, **caractérisé en ce que** ledit mât (11) est conçu de manière télescopique et est constitué de deux ou plus de deux sections télescopiques (110', 110") qui sont insérées l'une dans l'autre ou les unes dans les autres et qui peuvent être déplacées l'une par rapport à l'autre ou les unes par rapport aux autres au moyen d'un vérin hydraulique installé à l'intérieur dudit mât (11).

14. Ensemble d'entrainement selon la revendication 13, **caractérisé en ce que** ledit vérin hydraulique est conçu de manière télescopique.
